# EUROPEAN PATENT APPLICATION

(11) **EP 4 342 308 A1**
(43) Date of publication of application: **27.03.2024**
(21) Application number: 22804608.2
(22) Date of filing: 13.05.2022
(51) Int. Cl.: A23L 27/20, A23L 5/00, A23L 5/20, A23L 27/10

(54) **OFF-FLAVOR SUPPRESSING COMPOSITION**

(30) Priority: 17.05.2021 JP 2021083396
(71) Applicant: AJINOMOTO CO., INC., Chuo-ku Tokyo 104-8315 (JP)
(72) Inventor: SUGIYAMA, Shingo, Kawasaki-shi, Kanagawa 210-8681 (JP); KAWAUCHI, Masato, Kawasaki-shi, Kanagawa 210-8681 (JP)
(74) Representative: Strehl Schübel-Hopf & Partner
(86) International application number: PCT/JP2022/020203
(87) International publication number: WO 2022/244696

(57) **Abstract**

The present invention relates to a composition containing the following components (A) and (B), that can widely suppress off-tastes of food and drink:
(A) at least one γ-glutamyl peptide selected from the group consisting of a compound represented by the formula (I):

γ-Glu-X-Gly (I)

wherein X is an amino acid residue or an amino acid derivative residue, and
a compound represented by the formula (II):

γ-Glu-Y (II)

wherein Y is an amino acid residue or an amino acid derivative residue,
or a salt thereof, and

(B) at least one selected from the group consisting of citronellal, limonene, 2-methylpyrazine, butanoic acid, methyl anthranilate, and nootkatone.

## Description

### [Technical Field]

The present invention relates to compositions for suppressing off-tastes of oral products and methods for suppressing off-tastes, and oral products with suppressed off-tastes and production methods thereof.

### [Background Art]

In recent years, the development of food products for nutritional enrichment, health maintenance, and the like has been increasing. However, soybean protein, which is gaining popularity as a low-fat, high-protein food, and food products containing amino acids that are often insufficient have off-tastes such as bitter taste and rough taste, which hinders continuous use. In addition, animal proteins such as milk serum (whey), vitamins, amino acids, and the like used in beverages also have off-tastes and problematically cause a decline in taste. Thus, there is a demand for a technique to suppress off-tastes.

For example, it has been reported that uncomfortable tastes are suppressed by γ-glutamyl peptide (Patent Literatures 1, 2). It has also been reported that yeast-derived peptides with a specific amino acid composition can reduce the bitter taste of food and drink (Patent Literature 3).

On the other hand, it is not known that aroma components, which are generally used for imparting aroma, masking odor, and the like, are effective in suppressing off-tastes.

### [Citation List]

### [Patent Literature]

[PTL 1]
   JP-A-2019-187326
[PTL 2]
   JP-A-2020-031564
[PTL 3]
   JP-A-2009-278917

### [Summary of Invention]

### [Technical Problem]

The present invention aims to provide compositions that can widely suppress off-tastes of food products and the like.

### [Solution to Problem]

The present inventors have conducted intensive studies in an attempt to solve the aforementioned problems and found that the off-tastes of oral products can be suppressed and the effect can be sustained by simply adding a specific aroma compound, in addition to γ-glutamyl peptide, to the oral products, and completed the present invention.

Accordingly, the present invention provides the following.

[1] A composition for suppressing an off-taste, comprising the following components (A) and (B):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of citronellal, limonene, 2-methylpyrazine, butanoic acid, methyl anthranilate, and nootkatone.
[2] The composition of [1], wherein the component (A) is γ-Glu-Val-Gly or a salt thereof.
[3] The composition of [1] or [2], wherein the off-taste is a bitter taste, a rough taste, a harsh taste, or an astringent taste derived from an off-taste substance.
[4] The composition of [3], wherein the off-taste substance is at least one selected from the group consisting of a vegetable protein, an animal protein, an amino acid, a vitamin, and a high-intensity sweetener.
[5] The composition of any of [1] to [4], wherein the weight ratio of component (B) to component (A) is 1:0.00001 to 400 when converted to the weight of a free form.
[6] The composition of any of [1] to [5], which is used such that the amount of component (A) added to the oral product is 0.01 to 200 ppm by weight with respect to the total weight of the oral product, when converted to the weight of a free form.
[7] The composition of any of [1] to [5], which is used such that the amount of component (B) added to the oral product is 0.0005 to 20 ppm by weight with respect to the total weight of the oral product, when converted to the weight of a free form.
[8] A method for suppressing an off-taste of an oral product, comprising adding the following components (A) and (B):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of citronellal, limonene, 2-methylpyrazine, butanoic acid, methyl anthranilate, and nootkatone.
[9] The method of [8], wherein the component (A) is γ-Glu-Val-Gly or a salt thereof.
[10] The method of [8] or [9], wherein the off-taste is a bitter taste, a rough taste, a harsh taste, or an astringent taste derived from an off-taste substance.
[11] The method of [10], wherein the off-taste substance is at least one selected from the group consisting of a vegetable protein, an animal protein, an amino acid, a vitamin, and a high-intensity sweetener.
[12] The method of any of [8] to [11], wherein the weight ratio of the amount of component (B) to be added to the amount of component (A) to be added is 1:0.00001 to 400 when converted to the weight of a free form.
[13] The method of any of [8] to [12], wherein the amount of component (A) to be added with respect to the total weight of the off-taste substance in the oral product is 0.01 ppm by weight to 100% by weight when converted to the weight of a free form.
[14] The method of any of [8] to [13], wherein the amount of component (B) to be added with respect to the total weight of the off-taste substance in the oral product is 0.5 ppb by weight to 80% by weight when converted to the weight of a free form.
[15] A method for producing an oral product with a suppressed off-taste, comprising adding the following components (A) and (B) :
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of citronellal, limonene, 2-methylpyrazine, butanoic acid, methyl anthranilate, and nootkatone.
[16] The method of [15], wherein the component (A) is γ-Glu-Val-Gly or a salt thereof.
[17] The method of [15] or [16], wherein the off-taste is a bitter taste, a rough taste, a harsh taste, or an astringent taste derived from an off-taste substance.
[18] The method of [17], wherein the off-taste substance is at least one selected from the group consisting of a vegetable protein, an animal protein, an amino acid, a vitamin, and a high-intensity sweetener.
[19] The method of any of [15] to [18], wherein the weight ratio of the amount of component (B) to be added to the amount of component (A) to be added is 1:0.00001 to 400 when converted to the weight of a free form.
[20] The method of any of [15] to [19], wherein the amount of component (A) to be added to the amount of the total weight of the off-taste substance in the oral product is 0.01 ppm by weight to 100% by weight when converted to the weight of a free form.
[21] The method of any of [15] to [20], wherein the amount of component (B) to be added to the amount of the total weight of the off-taste substance in the oral product is 0.5 ppb by weight to 80% by weight when converted to the weight of a free form.
[22] An oral product obtained by the method of any of [15] to [21] .

### [Advantageous Effects of Invention]

According to the present invention, since bitter taste, rough taste, and the like are suppressed, it is possible to provide food products and the like that are easily ingested by a wide range of people, from children to elderly people.

According to the present invention, it is possible to provide foods with suppressed off-tastes, which can be easily consumed over a long period of time.

According to the present invention, since off-tastes can be suppressed easily without imparting other flavors, various processed food products can be produced.

### [Description of Embodiments]

The present invention relates to a composition for suppressing an off-taste, comprising the following components (A) and (B):
(A) at least one γ-glutamyl peptide selected from the group consisting of a compound represented by the formula (I):

   γ-Glu-X-Gly (I)

   wherein X is an amino acid residue or an amino acid derivative residue, and
   a compound represented by the formula (II):

      γ-Glu-Y (II)
   wherein Y is an amino acid residue or an amino acid derivative residue,
   or a salt thereof, and
(B) at least one selected from the group consisting of citronellal, limonene, 2-methylpyrazine, butanoic acid, methyl anthranilate, and nootkatone (at times referred to as "the composition of the present invention" in the present specification).

In the present invention, the "off-taste" refers to an uncomfortable taste and flavor that are not felt when ingesting or taking ordinary foods, oral medicines, or the like. Specific examples thereof include a bitter taste, a rough taste, a harsh taste, a metallic taste, an astringent taste (feeling that the tongue is squeezed) and the like. The presence or absence of off-taste and the degree thereof can be evaluated, for example, by sensory evaluation or the like by an expert panel.

In the present invention, "suppression" of the off-taste means making the intensity of the off-taste of a substance causing the off-taste (also to be referred to as off-taste substance) partially or completely undetectable.

The off-taste substance refers to a substance capable of exhibiting an off-taste in the mouth.

Specific examples of the off-taste substance include, but are not limited to, vegetable protein, animal protein, amino acid, vitamin, high-intensity sweetener, and the like.

In the present invention, the "vegetable protein" refers to protein-containing plants (e.g., cereal, vegetable, etc.) that have been processed to have an increased content percentage of protein. Examples of vegetable proteins that can be off-taste substances include soybean protein, pea protein, fava bean protein, chickpea protein, almond protein, sunflower protein, and the like. The form of the vegetable protein is not particularly limited, and may be, for example, a powdery, granular, fibrous, or pasty form.

Particularly, the composition of the present invention is preferably used to suppress off-tastes derived from vegetable protein of soybean. Specific types of off-tastes include, for example, bitter tastes, rough tastes, harsh tastes, astringent tastes, and the like.

In the present invention, the "animal protein" refers to protein-containing animal-derived materials (meat, seafood, eggs, dairy product) themselves or such materials that have been processed to have an increased content percentage of protein. Examples of animal proteins that can be off-taste substances include milk serum (whey), casein, egg white, and the like. The form of the animal protein is not particularly limited, and may be, for example, a powdery, granular, fibrous, or pasty form.

The composition of the present invention is particularly preferably used to suppress off-tastes derived from animal protein in milk serum (whey). Specific types of off-tastes include, for example, bitter tastes, rough tastes, harsh tastes, astringent tastes, and the like.

Examples of the "amino acid" in the present invention include branched chain amino acid (valine, leucine, isoleucine), tryptophan, phenylalanine, arginine, cysteine, methionine, lysine, histidine, tyrosine, glycine, and the like. These amino acids may be in the form of salts. The salt of amino acid is not particularly limited as long as it can exhibit an off-taste, and examples thereof include salts with inorganic acids (e.g., hydrochloric acid, hydrobromic acid, sulfuric acid, phosphoric acid, etc.); salts with organic acids (e.g., acetic acid, lactic acid, citric acid, tartaric acid, maleic acid, fumaric acid, mono methylsulfuric acid, etc.); salts with inorganic bases (e.g., sodium, potassium, calcium, ammonia, etc.); and salts with organic bases (e.g., ethylenediamine, propylenediamine, ethanolamine, monoalkyl ethanolamine, dialkyl ethanolamine, diethanolamine, triethanolamine, etc.). The salt of amino acid may be hydrate (hydrate salt), and examples of the hydrate include 1 - 6 hydrates and the like.

In the present specification, the amino acid as the off-taste substance also include amino acid, a salt thereof and a hydrate thereof.

Particularly, the composition of the present invention is preferably used to suppress off-tastes derived from amino acids such as branched chain amino acid and the like or a salt thereof, a mixture thereof. Specific types of off-tastes include, for example, bitter tastes, harsh tastes, and the like.

In the present invention, the "vitamin" includes, for example, vitamin A, vitamin B₁, vitamin B₂, vitamin B₆, vitamin B₁₂, vitamin C, vitamin D, vitamin E, niacin, pantothenic acid, folic acid, biotin, vitamin P, derivatives thereof, salts thereof, and the like.

Particularly, the composition of the present invention is preferably used to suppress off-tastes derived from vitamins such as vitamins B₁, B₂, pantothenic acid, niacin or derivatives thereof, especially, thiamine (vitamin B₁) and a salt thereof, and the like. As specific kinds of off-taste, bitter taste, rough taste, harsh taste, astringent taste, and the like can be mentioned.

In the present invention, the "high-intensity sweetener" is a generic term for non-carbohydrate sweeteners having higher sweetness as compared with sucrose (specifically, 10 times or more sweeter than sucrose). The high-intensity sweetener that may become an off-taste substance may be a natural sweetener or a synthetic sweetener, and examples thereof include stevia (rebaudioside, stevioside), acesulfame potassium, sucralose, aspartame, thaumatin, saccharin, saccharin sodium, licorice, neotame, advantame, and the like.

Among others, the composition of the present invention is preferably used to suppress off-tastes derived from high-intensity sweeteners such as stevia, acesulfame potassium, aspartame, advantame, and the like. As specific kinds of off-taste, bitter taste, harsh taste, metallic taste, and the like can be mentioned.

### (A) γ-glutamyl peptide

As the γ-glutamyl peptide in the present invention, the above-mentioned γ-glutamyl tripeptide represented by the formula (I) and γ-glutamyl dipeptide represented by the formula (II) can be mentioned. In the above-mentioned formulas, "γ-" means that X or Y is bonded via the carboxyl group at the γ-position of glutamic acid. As the γ-glutamyl peptide, the above-mentioned one kind of γ-glutamyl peptide may be used, or two or more kinds of γ-glutamyl peptides may be used in combination.

X and Y in the formulas (I) and (II) are each an amino acid residue or an amino acid derivative residue. Examples of the amino acid include neutral amino acids such as glycine (Gly), alanine (Ala), valine (Val), leucine (Leu), isoleucine (Ile), serine (Ser), threonine (Thr), cysteine (Cys), methionine (Met), asparagine (Asn), glutamine (Gln), proline (Pro), hydroxyproline (Hyp), and the like, acidic amino acids such as aspartic acid (Asp), glutamic acid (Glu), and the like, basic amino acids such as lysine (Lys), arginine (Arg), histidine (His), and the like, aromatic amino acids such as phenylalanine (Phe), tyrosine (Tyr), tryptophan (Trp), and the like, and other amino acids such as ornithine (Orn), sarcosine (Sar), citrulline (Cit), norvaline (Nva), norleucine (Nle), α-aminobutyric acid (Abu), taurine (Tau), tert-leucine (t-Leu), cycloleucine (Cle), α-aminoisobutyric acid (2-methylalanine) (Aib), penicillamine (Pen), homo serine (Hse), and the like.

The amino acid derivatives refer to various derivatives of the above-mentioned amino acids. Examples of the amino acid derivative include unnatural amino acid, amino alcohol, and amino acids in which one or more of the functional groups such as terminal carbonyl group, terminal amino group, and the thiol group of cysteine are substituted with various substituents. Specific examples of the substituent include alkyl group, acyl group, hydroxyl group, amino group, alkylamino group, nitro group, sulfonyl group, and various protecting groups.

As the amino acid derivative, for example, Arg(NO₂):N-γ-nitroarginine, Cys(SNO):S-nitroso cysteine, Cys(S-Me):S-methylcysteine, Cys(S-allyl):S-allylcysteine, Val-NH₂:valine amide, Val-ol:valinol(2-amino-3-methyl-1-butanol), Met(O):methionine sulfoxide, Cys(S-Me)(O):S-methylcysteinesulfoxide, and the like can be mentioned.

As the γ-glutamyl peptide, for example, γ-Glu-Val-Gly, γ-Glu-Nva-Gly, γ-Glu-Abu, and γ-Glu-Nva can be mentioned, among which γ-Glu-Val-Gly is preferred.

In the present invention, the amino acid and amino acid derivative constituting the γ-glutamyl peptide are in an L-form unless particularly noted.

In the present invention,, the salt of γ-glutamyl peptide is not particularly limited as long as it can be ingested orally. For example, as the salts for acidic groups such as carboxyl group and the like, salts with alkali metals such as ammonium salt, sodium, potassium and the like, salts with alkaline earth metals such as calcium, magnesium, and the like, salts with organic amines such as aluminum salt, zinc salt, triethylamine, ethanolamine, morpholine, pyrrolidine, piperidine, piperazine, dicyclohexylamine and the like, arginine, lysine and the like basic amino acid salt with can be mentioned. Examples of the salt with basic group, amino group, and the like include salts with inorganic acids such as hydrochloric acid, sulfuric acid, phosphoric acid, nitric acid, hydrobromic acid and the like, salts with organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, methylmalonic acid and the like, salts with organic sulfonic acid such as methanesulfonic acid, benzenesulfonic acid, p-toluenesulfonic acid, and the like can be mentioned. Only one kind of salt may be used, or two or more kinds of salts may be used in combination.

As γ-glutamyl peptide and a salt thereof, commercially available products may be used, or those obtained by appropriate production may also be used.

The production method of peptide is not particularly limited and, for example, known methods can be utilized. Examples of the known method include (1) a method for chemically synthesizing peptide and (2) a method for synthesizing peptide by an enzymatic reaction. When synthesizing a comparatively short peptide with 2 or 3 amino acid residues, a method for chemical synthesis is particularly convenient.

When chemically synthesizing peptides, the peptides can be synthesized or semisynthesized using a peptide synthesizer. As a method for chemically synthesizing peptides, solid-phase peptide synthesis can be mentioned. The synthesized peptide can be purified by conventional means, such as ion exchange chromatography, reversed-phase high performance liquid chromatography, and affinity chromatography. Such solid-phase peptide synthesis methods and subsequent peptide purification are well known in the technique field.

When synthesizing peptides by an enzymatic reaction, for example, the method described in WO2004/011653 can be used. Specifically, for example, dipeptide or tripeptide can be synthesized by reacting an amino acid or dipeptide whose carboxyl group has been esterified or amidated with an amino acid whose amino group is free (for example, an amino acid whose carboxyl group is protected) in the presence of a peptidyl transferase. The synthesized dipeptide or tripeptide can be appropriately purified. Examples of the peptidyl transferase include cultures of microorganisms that have the ability to generate peptides, culture supernatants isolated from the cultures, bacterial cells isolated from the cultures, processed bacterial cells of the microorganisms, and peptidyl transferases isolated therefrom. As the peptidyl transferases, those purified as appropriate can be used where necessary.

γ-Glutamyl peptide can be produced, for example, by culturing a microorganism capable of producing the γ-glutamyl peptide and recovering the γ-glutamyl peptide from the culture medium or bacterial cells. Specifically, for example, yeast containing a high concentration of γ-glutamyl peptide such as γ-Glu-Abu can be obtained by the method described in JP-A-2012-213376. In addition, γ-glutamyl peptide can be produced, for example, by recovering from agricultural/aquatic/livestock products containing the γ-glutamyl peptide.

The γ-glutamyl peptide may or may not be a purified product. That is, as the γ-glutamyl peptide, a material containing the peptide at a high content may also be used. "Containing γ-glutamyl peptide at a high content" is not limited to blending the peptide itself, but also includes blending a material containing the peptide at a high content. "Containing γ-glutamyl peptide at a high content" means that the content of γ-glutamyl peptide is not less than 100 ppm by weight. That is, "blending (adding) γ-glutamyl peptide" is not limited to blending the peptide itself, but also includes blending a material containing a high content of the peptide. Examples of the material containing a high content of γ-glutamyl peptide include fermentation products such as culture solution, bacterial cells, and culture supernatant obtained by culturing microorganisms capable of producing the peptide, and processed products thereof. The processed products include those obtained by subjecting the above-mentioned fermentation products to treatments such as concentration, dilution, drying, fractionation, extraction, and purification. Examples of such processed products include yeast extracts containing γ-glutamyl peptides such as γ-Glu-Abu (JP-A-2012-213376). In addition to yeast extract, there may be foods and drinks (including ingredients and seasonings) that naturally contain γ-glutamyl peptide. Such foods and drinks (including ingredients and seasonings) other than yeast extract may be excluded from the "material containing γ-glutamyl peptide at a high content" in the present invention. The γ-glutamyl peptide may be purified to any desired degree. For example, the γ-glutamyl peptide may have a purity of not less than 50% by weight, not less than 70% by weight, not less than 90% by weight, or not less than 95% by weight.

The concentration and content ratio of γ-glutamyl peptide in the composition of the present invention can be appropriately set according to various conditions such as the kind of γ-glutamyl peptide, the concentration of γ-glutamyl peptide at the time of eating, and the amount of use of the composition of the present invention.

The amount (concentration) of the component (A) γ-glutamyl peptide in the composition of the present invention to be added to an oral product is such that the concentration at the time of eating is within a range desired from the aspect of suppressing off-tastes. For example, it is used such that its concentration at the time of eating is generally not less than 0.01 ppm by weight, preferably not less than 0.05 ppm by weight, more preferably not less than 0.1 ppm by weight, and the upper limit is generally not more than 200 ppm by weight, preferably not more than 100 ppm by weight, more preferably not more than 50 ppm by weight, with respect to the total weight of the oral product, when converted to the weight of a free form of the component (A) γ-glutamyl peptide.

Specifically, the concentration is generally 0.01 to 200 ppm by weight, preferably 0.05 to 100 ppm by weight, more preferably 0.1 to 50 ppm by weight.

In the present specification, the concentration at the time of eating means the concentration of component (A) γ-glutamyl peptide at the time of intake of an oral product (oral administration, oral use), and shows the concentration at the time of eating after cooking. The concentration at the time of intake of quasi-drugs such as toothpaste and mouthwash refers to the concentration at the time of use, that is, the concentration at the time of placing same in the mouth. For example, when the oral product is a concentrated drink, it means the concentration of γ-glutamyl peptide in the drink when it is drunk after dilution, and when the oral product is a powdered drink, it means the concentration of γ-glutamyl peptide in the drink when it is drunk after dissolution in drinking water or the like.

### (B) Aroma compound

The composition of the present invention contains at least one aroma compound selected from citronellal, limonene, 2-methylpyrazine, butanoic acid, methyl anthranilate, and nootkatone.

In the present invention, the aroma compound refers to a compound used as a flavor and the like, which is a low-molecular-weight compound having a molecular weight of about 80 to 220. Specifically, the following 6 kinds can be mentioned:
· citronellal (CAS Registry Number:2385-77-5)
· limonene ((R)-(+)-limonene) (CAS Registry Number:5989-27-5) or ((R/S)-(+)-limonene) (CAS Registry Number:138-86-3)
· butanoic acid (CAS Registry Number:107-92-6)
· 2-methylpyrazine (CAS Registry Number:109-08-0)
· methyl anthranilate (CAS Registry Number:134-20-3)
· nootkatone (CAS Registry Number:4674-50-4).

The aroma compound to be used in the present invention may be produced by a method known per se (e.g., chemical synthesis method, enzyme method, fermentation method, etc.) or a method analogous thereto, or an isolated product obtained by extraction and purification from a material containing an aroma compound. Examples of the material containing an aroma compound include naturally occurring substances such as agricultural/livestock/aquatic products and the like; fermentation products such as culture medium, bacterial cells and the like obtained by culturing microorganisms; and processed products thereof, and the like. A commercially available product may be used as the aroma compound.

In the present invention, a material containing an aroma compound may be used as it is or purified to a desired degree and used in place of a chemically synthesized product or isolated product of the aroma compound, or in addition to the chemically synthesized product or isolated product.

In the composition of the present invention, only one kind of the above-mentioned aroma compound may be contained alone, or two or more kinds thereof may be contained in combination.

The amount (concentration) of the component (B) aroma compound in the composition of the present invention to be added to an oral product is such that the concentration at the time of eating is within a range desired from the aspect of suppressing off-tastes. For example, it is used such that its concentration at the time of eating is generally not less than 0.0005 ppm by weight, preferably not less than 0.001 ppm by weight, more preferably not less than 0.005 ppm by weight, and the upper limit is generally not more than 20 ppm by weight, preferably not more than 10 ppm by weight, more preferably not more than 4 ppm by weight, with respect to the total weight of the oral product, when converted to the weight of a free form of the component (B) aroma compound.

Specifically, the concentration is generally 0.0005 to 20 ppm by weight, preferably 0.001 to 10 ppm by weight, more preferably 0.005 to 4 ppm by weight.

More specifically, the amount (concentration) of citronellal, limonene, 2-methylpyrazine, butanoic acid and methyl anthranilate of component (B-1) in the composition of the present invention to be added to an oral product is such that the concentration at the time of eating is within a range desired from the aspect of suppressing off-tastes. For example, it is used such that its concentration at the time of eating is generally not less than 0.0005 ppm by weight, preferably not less than 0.001 ppm by weight, more preferably not less than 0.005 ppm by weight, and the upper limit is generally not more than 5 ppm by weight, preferably not more than 0.5 ppm by weight, more preferably not more than 0.1 ppm by weight, with respect to the total weight of the oral product, when converted to the weight of a free form of the component (B) aroma compound.

Specifically, the concentration is generally 0.0005 to 5 ppm by weight, preferably 0.001 to 0.5 ppm by weight, more preferably 0.005 to 0.1 ppm by weight.

More specifically, the amount (concentration) of nootkatone of component (B-2) in the composition of the present invention to be added to an oral product is such that the concentration at the time of eating is within a range desired from the aspect of suppressing off-tastes. For example, it is used such that its concentration at the time of eating is generally not less than 0.05 ppm by weight, preferably not less than 0.1 ppm by weight, more preferably not less than 0.5 ppm by weight, and the upper limit is generally not more than 20 ppm by weight, preferably not more than 10 ppm by weight, more preferably not more than 4 ppm by weight, with respect to the total weight of the oral product, when converted to the weight of a free form of the component (B) aroma compound.

Specifically, the concentration is generally 0.05 to 20 ppm by weight, preferably 0.1 to 10 ppm by weight, more preferably 0.5 to 4 ppm by weight.

In the present specification, the concentration at the time of eating means the concentration of component (B) aroma compound at the time of intake of an oral product (oral administration, oral use), and shows the concentration at the time of eating after cooking. The concentration at the time of taking quasi-drugs such as toothpaste and mouthwash refers to the concentration at the time of use, that is, the concentration at the time of placing same in the mouth. For example, when the oral product is a concentrated drink, it means the concentration of aroma compound in the drink when it is drunk after dilution, and when the oral product is a powdered drink, it means the concentration of aroma compound in the drink when it is drunk after dissolution in drinking water or the like.

The total amount of components (A) and (B) contained in the composition of the present invention is, for example, generally not less than 0.001% by weight, preferably not less than 0.1% by weight, more preferably not less than 1% by weight, with respect to the total weight of the composition of the present invention. The amount is generally not more than 100% by weight, preferably not more than 99% by weight, more preferably not more than 90% by weight, with respect to the composition of the present invention.

Specifically, the amount is generally 0.001 to 100% by weight, preferably 0.1 to 99% by weight, more preferably 1 to 90% by weight.

The concentration and content ratio of component (A) in the composition of the present invention can be appropriately set according to various conditions such as the kind of γ-glutamyl peptide and the kind of component (B), and the kind of a food product for which the composition of the present invention is used.

The weight ratio of components (A) and (B) ((A):(B)) in the composition of the present invention is generally 1:0.00001 to 400, preferably 1:0.00005 to 200, more preferably 1:0.0001 to 40, from the aspect of suppressing off-tastes, when converted to the weight of a free form.

The weight ratio of components (A) and (B-1) citronellal, limonene, 2-methylpyrazine, butanoic acid, and methyl anthranilate ((A):(B-1)) in the composition of the present invention is generally 1:0.00001 to 10, preferably 1:0.00005 to 5, more preferably 1:0.0001 to 1, from the aspect of suppressing off-tastes, when converted to the weight of a free form.

The weight ratio of components (A) and (B-2) nootkatone ((A):(B-2)) in the composition of the present invention is generally 1:0.001 to 400, preferably 1:0.005 to 200, more preferably 1:0.01 to 40, from the aspect of suppressing off-tastes, when converted to the weight of a free form.

The composition of the present invention can be produced using only components (A) and (B) or by adding "other components", and according to a method conventionally used in the field of food production and the like.

The "other components" are not particularly limited as long as they do not impair the effects of the present invention. For example, amino acids such as γ-aminobutyric acid, serine, alanine, glutamic acid, glycine and the like, and salts thereof; organic acids such as acetic acid, tartaric acid and the like and salts thereof; inorganic salts such as edible salt, sodium chloride, potassium chloride, and the like; dietary fibers such as indigestible dextrin and the like; saccharides such as sugar, honey, maple syrup, sucrose, glucose, fructose, isomerized sugar, oligosaccharide, and the like; sugar alcohols such as xylitol, erythritol, and the like; high-intensity sweetener; nucleic acids such as inosinic acid, guanylic acid, xanthylic acid, and the like and salts thereof; pH buffering agent, pH adjuster, excipient, filler, flavor, edible oil, antioxidant, thickening stabilizer, emulsifier, edible salt, organic salts, inorganic salts, seasonings (e.g., *umami* seasoning such as sodium glutamate, etc.), acidulant, colorant, food color former, ethanol, and water can be mentioned.

Among these, it is preferable to contain amino acids such as γ-aminobutyric acid and serine, since they can also suppress off-flavors.

As "other component", one kind of component may be used, or two or more kinds of components may be used in combination.

The composition of the present invention can contain other components in a proportion of 0 to 99.999% by weight, preferably 1 to 99.9% by weight, more preferably 10 to 99% by weight, of the composition as long as the effect of the present invention can be afforded.

The form of the composition of the present invention is not particularly limited. It is a form that is easy to add to foods and drinks, and powder, granules, liquid, syrup, gel, paste, cube, and the like can be mentioned. Formulation can be performed by a conventional method.

The composition of the present invention can be produced by a method known per se or a method analogous thereto.

The composition of the present invention is used to suppress an off-taste of oral products (e.g., food product, oral medicines etc.) added with an off-taste substance. In particular, the composition of the present invention is more preferably used to suppress off-tastes (e.g., bitter taste, metallic taste, harsh taste, astringent taste, rough taste, etc.) derived from vegetable proteins, animal proteins, amino acids, vitamins, and high-intensity sweeteners in oral products. The composition of the present invention can also be used as an off-taste inhibitor.

The present invention also includes a method for suppressing an off-taste of an oral product, including adding the following components (A) and (B) (hereinafter sometimes to be abbreviated as the method of the present invention).

The definitions of components (A) and (B) that can be used in the method of the present invention are as described above.

In addition, the kind of off-taste substance in the oral product in the method of the present invention is as described above.

In the present invention, the "oral product" means a substance that can be ingested or taken orally, and specific examples thereof include food product, seasoning, pharmaceutical product, quasi-drug, perfumery, and the like.

In the present invention, the "food" broadly includes foods that can be ingested orally (excluding medicine), and unless otherwise specified, also includes so-called foods, beverages, seasonings, supplements, and the like. Food is a concept also including food compositions.

The oral product in the present invention is not particularly limited as long as it contains the above-mentioned off-taste substances and is required to suppress off-tastes. For example, those containing vegetable proteins, animal proteins, amino acids, vitamins, high-intensity sweeteners, and the like are preferred.

Food products are not particularly limited as long as they contain off-taste substances (vegetable proteins, animal proteins, amino acids, vitamins, high-intensity sweeteners). Examples thereof include off-taste substances themselves, plant and animal materials containing off-taste substances, and processed food products using the materials.

Specific food products include, for example, food products containing vegetable proteins including pulses such as soybean and processed foods thereof, food products containing animal proteins such as dairy products, amino acid-containing food products, vitamin-containing food products, high-intensity sweetener-containing food products, and the like.

Food products containing vegetable protein include, for example, soy milk, soy milk beverage, processed soy milk; soybean powder (soy flour) prepared by pulverizing roasted beans; tofu, dried beancurd (yuba), wheat gluten cake prepared from soy milk; freeze-dried tofu, thick fried tofu, *ganmodoki,* deep-fried bean curd, grilled tofu and the like prepared from tofu; tofu refuse; stewed beans and steamed beans; soybean and processed food products thereof prepared from steamed beans, such as soybean paste, fermented soybeans, and the like.

They also include food products that are prepared using the above-mentioned soybean processed food products as ingredients and blending together, where necessary, other ingredients. Examples include, but are not limited to, confectioneries such as soy milk pudding, tofu refuse cake, cake with soy flour, tofu refuse cookie, nutrition bar with soy flour, *kinakonejiri* (soybean flour twist), and soy flour candy; breads such as low-carb bread with soybean flour; meat-containing food products such as soybean meat, hamburg steak with soybean protein, meat ball, *gyoza* dumpling, *shumai* dumpling, fried cake of minced meat, deep-fried soybean protein, and hams and sausages containing soybean protein; nutrient-enriched foods such as protein powder and baby milk powder for nutritional enrichment purposes; noodles containing soybean protein; soybean protein-containing batter for deep-frying; and seafood-containing food products such as soybean protein-containing fish sausages, boiled fish paste, and chikuwa, soups (including dried soups); other processed food products; and frozen food products.

As food products having a green smell of plants, processed tomato food products, processed olive food products, and the like can be mentioned. Processed tomato food products include tomato sauce, concentrated tomatoes, tomato puree, tomato paste, tomato juice, solid tomato, and tomato soup. Further, processed olive food products include olive oil, olive paste, and the like.

Examples of the food products containing animal protein include drinks such as milk beverage, lactic fermenting beverage, beverage (including those containing fruit juice), carbonated drinks, fruit juiced rinks, vegetable drinks, vegetable and/or fruit drinks, sports drink, jelly drinks, powder drinks, and the like; alcoholic drinks; tea drinks such as coffee drinks, tea drinks, and the like; soups such as corn soup, consomme soup (e.g., chicken, pork, beef, etc.), potage soup, chicken broth, soup with egg, soup with *wakame* seaweed, soup with shark fin, Chinese-style soup, curry flavor soup, ramen noodle soup, Japanese-style clear soup, miso soup and the like, and instant powder food products thereof; desserts such as whip cream, jam, fruit syrup, jelly, bavarois and yoghurt and the like; retort food products such as curry, stew, *gyudon,* soup and the like; hamburg steak, hum, sausage, *gyoza* dumpling, shumai dumpling, deep-fried food, pork cutlet and the like; processed marine products such as boiled fish-paste, tubular fish-paste and the like; dairy products such as cheese and the like; dairy products such as butter, fermented milk, powdered milk, and the like; frozen desserts such as ice cream, ice milk, lact ice, sherbet, ice dessert, and the like; confectioneries such as gummi candy, candy, gum, tablet confectionery, snack, and the like; breads; noodles (fried noodles and nonfried noodles and the like instant noodles) such as Japanese wheat noodles, *hiyamugi, somen,* buckwheat noodle, Chinese noodle, spaghetti, macaroni, rice noodle, gelatin noodle, *won ton* dumplings, and the like; nutrition bar: and the like.

Amino acid-containing foods are not particularly limited as to the form thereof as long as they contain amino acids. For example, nutritional aid food products and energy drinks that contain high doses of amino acids, food products that are the above-described food products containing amino acids, and the like can be mentioned.

Vitamin-containing food products are not particularly limited as to the form thereof as long as they contain vitamins. For example, nutritional aid food products and energy drinks that contain high doses of vitamins, food products that are the above-described food products containing vitamins, and the like can be mentioned.

High-intensity sweetener-containing food products are not particularly limited as to the form thereof as long as they contain high-intensity sweeteners. For example, the above-mentioned desserts, confectioneries, drinks, nutrition aid food products, and energy drinks containing high-intensity sweeteners, and food products that are the above-described food products containing high-intensity sweeteners, and the like can be mentioned.

The food product may be provided (sold, distributed) in a form for eating as is, or may be provided in a form that requires a predetermined processing or cooking to have a form suitable for eating. For example, the food product may be eaten or drunk after preparation, before or at the time of eating, into a form suitable for eating. For example, in the case of a beverage such as a soft drink, it may be provided as a packaged beverage that can be taken as is, or as a concentrate such as a powder that can be diluted and eaten.

In addition, the food product is not limited to general food products, but also includes what is called health food products and medical food products such as nutrition aid food product (supplement), foods with nutritional function, foods for specified health use, and the like. For example, the food products exemplified above may be provided as general food products, or as health food products or medical food products.

Examples of the seasoning include savory seasoning, flavor seasoning, menu seasoning, mayonnaise; solid seasonings such as sugar, salt, and the like; liquid seasonings such as dressing, ketchup, mayonnaise, gravy, sauce (ex. demiglace sauce, medium thick sauce, white sauce, cheese sauce, etc.) and the like; semisolid seasonings such as miso and the like; and the like.

In the present specification, the "savory seasoning" refers to a seasoning produced from a natural substance as a material according to a method such as extraction, decomposition, heating, fermentation, and the like. Concrete examples thereof include various meat extracts such as chicken meat extract, beef meat extract, pork meat extract, sheep meat extract, and the like; various bone extracts such as chicken bone extract, beef bone extract, pork bone extract, and the like; various seafood extracts such as bonito extract, mackerel extract, croaker extract, scallop extract, crab extract, shrimp extract, dried sardine extract, dried adductor extract, and the like; various dried fish extracts such as dried bonito extract, dried mackerel extract, dried bullet mackerel extract, and the like; various vegetable extracts such as onion extract, Chinese cabbage extract, celery extract, and the like; various seaweed extracts such as kelp extract and the like; various spice extracts such as garlic extract, chili extract, pepper extract, cacao extract, and the like; yeast extracts; various protein hydrolysates; various fermentation seasonings such as soy sauce, fish sauce, shrimp sauce, *miso* and the like, and the like, and mixtures thereof, processed product (e.g., soy sauce processed product such as Japanese noodle soup base, citrus seasoned soy sauce, and the like), and the like. The "flavor seasoning" refers to a seasoning used to impart aroma, flavor and taste of a flavor material to a food, and can be produced by, for example, adding sugar, salt and the like to a savory seasoning, or the like. Specific examples of the flavor seasoning include various meat flavor seasonings such as chicken flavor seasoning, beef flavor seasoning, pork flavor seasoning, and the like; various seafood flavor seasonings such as bonito flavor seasoning, dried sardine flavor seasoning, dried adductor flavor seasoning, crustacean flavor seasoning, and the like; various spicy vegetable flavor seasonings; kelp flavor seasoning and the like. The "menu seasoning" refers to a seasoning suitable for cooking a particular menu (Chinese-style menu, etc.). Concrete examples thereof include Chinese-style combined seasoning, combined seasoning, generic paste seasoning, seasoning mix for cooked rice mixed with ingredients, seasoning mix for Chinese fried rice, spice mix, and the like.

The pharmaceutical product is not particularly limited as long as it contains the above-mentioned off-taste substance, and includes any oral pharmaceutical products. Examples include vitamins, revitalizers, nutritional supplements, supplements, and various pharmaceutical preparations. The form of these is not questioned, and they may be any of powders, granules, pills, tablets, liquids, syrups, and the like. Among these, orally disintegrating tablets, troches, chewable tablets, and the like, which are taken by dissolving in the mouth, are preferred.

Examples of quasi-drugs include toothpastes, oral algefacients, halitosis prophylaxis agents, halitosis elimination agents, mouthwashes, gargles, and the like.

Perfumery includes lip rouge and the like.

In the present invention, the off-taste substance that can be contained in the oral product is not particularly limited as long as it can be orally ingested, and an off-taste substance produced by a method known per se or a method analogous thereto may be used. For example, it may be a chemically synthesized product produced by a chemical synthesis method, or an isolated product extracted and purified from a material containing an off-taste substance. In addition, a material containing an off-taste substance may be used as it is or after purification to a desired degree. The off-taste substance may be a commercially available product.

The method and conditions for adding the components (A) and (B) of the present invention to an oral product (e.g., food, oral medicine, etc.) are not particularly limited, and addition can be performed by a method known per se or a method analogous thereto, according to the kind and form of the components (A) and (B) of the present invention, the kind of the oral product to which the components (A) and (B) are added, and the like. The time when the components (A) and (B) are added to an oral product is not particularly limited, and they can be added, for example, during the production of the oral product, after the production of the oral product, or the like. The components (A) and (B) may also be added to a raw material before producing the oral product. The components (A) and (B) may also be added at the same time or at different times, and the order of addition is not particularly limited.

In the present invention, the amount of the components (A) and (B) to be added to the oral product can be set according to the amount of an off-taste substance to be added to the oral product.

For example, when additional addition of an off-taste substance to "an oral product containing an off-taste substance but not exhibiting an unacceptable off-taste" (that is, increasing the amount of the off-taste substance contained in the oral product) causes an unacceptable off-taste of the composition, the amount of the components (A) and (B) to be added to the oral product may be set according to the amount (increased amount) of the additionally added off-taste substance. It is not necessary to consider the amount of an off-taste substance originally contained in the oral product (oral product that does not exhibit an unacceptable off-taste) before the additional addition of the off-taste substance.

When an oral product produced by adding an off-taste substance as one of the materials exhibits an off-taste, the amount of the components (A) and (B) to be added to the oral product can be set according to the amount of the off-taste substance used as the material.

When an off-taste substance is additionally added to an oral product having an off-taste produced by adding an off-taste substance as one of the materials, the amount of the components (A) and (B) to be added to the oral product can be set according to the total amount of the off-taste substance used as the material and the amount of the off-taste substance added additionally.

The addition amount of the components (A) and (B) to the oral product (amount of components (A) and (B) to be added to the oral product) in the method of the present invention is as follows.

The amount (concentration) of the component (A) γ-glutamyl peptide in the method of the present invention to be added to an oral product is such that the concentration at the time of eating is within a range desired from the aspect of suppressing off-tastes. For example, it is added such that its concentration at the time of eating is generally not less than 0.01 ppm by weight, preferably not less than 0.05 ppm by weight, more preferably not less than 0.1 ppm by weight, and the upper limit is generally not more than 200 ppm by weight, preferably not more than 100 ppm by weight, more preferably not more than 50 ppm by weight, with respect to the total weight of the oral product, when converted to the weight of a free form of the component (A) γ-glutamyl peptide.

Specifically, the concentration is generally 0.01 to 200 ppm by weight, preferably 0.05 to 100 ppm by weight, more preferably 0.1 to 50 ppm by weight.

The amount (concentration) of the component (B) in the method of the present invention to be added to an oral product is such that the concentration at the time of eating is within a range desired from the aspect of suppressing off-tastes. For example, it is added such that its concentration at the time of eating is generally not less than 0.0005 ppm by weight, preferably not less than 0.001 ppm by weight, more preferably not less than 0.005 ppm by weight, and the upper limit is generally not more than 20 ppm by weight, preferably not more than 10 ppm by weight, more preferably not more than 4 ppm by weight, with respect to the total weight of the oral product, when converted to the weight of a free form of the component (B) .

Specifically, the concentration is generally 0.0005 to 20 ppm by weight, preferably 0.001 to 10 ppm by weight, more preferably 0.005 to 4 ppm by weight.

More specifically, the amount (concentration) of the component (B-1) citronellal, limonene, 2-methylpyrazine, butanoic acid and methyl anthranilate in the method of the present invention to be added to an oral product is such that the concentration of the component (B-1) at the time of eating is within a range desired from the aspect of suppressing off-tastes. For example, the component (B-1) is added such that its concentration at the time of eating is generally not less than 0.0005 ppm by weight, preferably not less than 0.001 ppm by weight, more preferably not less than 0.005 ppm by weight, and the upper limit is generally not more than 5 ppm by weight, preferably not more than 0.5 ppm by weight, more preferably not more than 0.1 ppm by weight, with respect to the total weight of the oral product, when converted to the weight of a free form of the component (B-1).

Specifically, the concentration is generally 0.0005 to 5 ppm by weight, preferably 0.001 to 0.5 ppm by weight, more preferably 0.005 to 0.1 ppm by weight.

The amount (concentration) of the component (B-2) nootkatone in the method of the present invention to be added to an oral product is such that the concentration at the time of eating is within a range desired from the aspect of suppressing off-tastes. For example, it is added such that its concentration at the time of eating is generally not less than 0.05 ppm by weight, preferably not less than 0.1 ppm by weight, more preferably not less than 0.5 ppm by weight, and the upper limit is generally not more than 20 ppm by weight, preferably not more than 10 ppm by weight, more preferably not more than 4 ppm by weight, with respect to the total weight of the oral product, when converted to the weight of a free form of the component (B-2).

Specifically, the concentration is generally 0.05 to 20 ppm by weight, preferably 0.1 to 10 ppm by weight, more preferably 0.5 to 4 ppm by weight.

In the method of the present invention, the amount of each of the components (A) and (B) to be added can be determined depending on the kind of food products containing off-taste substances and the contents thereof.

The contents of off-taste substances in oral products vary depending on the kind of the substance and the form of the oral product containing the substance. For example, an off-taste is felt when the content is not less than 1% by weight in an aqueous solution of a soybean powder, not less than 1% by weight in an aqueous solution of whey, not less than 0.05% by weight in an aqueous solution of an amino acid mixture, not less than 0.1% by weight in an aqueous solution of vitamin, and not less than 0.01% by weight in an aqueous solution of high-intensity sweetener. Components (A) and (B) in the present invention can be added to an off-taste substance at the following proportions:
component (A): with respect to the total weight of the off-taste substance and when converted to the weight of a free form, generally not less than 0.01 ppm by weight, preferably not less than 0.02 ppm by weight, more preferably not less than 0.2 ppm by weight, generally not more than 100% by weight, preferably not more than 10% by weight, more preferably not more than 5% by weight, specifically, generally 0.01 ppm by weight to 100% by weight, preferably 0.02 ppm by weight to 10% by weight, more preferably 0.2 ppm by weight to 5% by weight; in another embodiment, generally not less than 0.01 ppm by weight, preferably not less than 0.02 ppm by weight, more preferably not less than 0.1 ppm by weight, generally not more than 100% by weight, preferably not more than 50% by weight, more preferably not more than 30% by weight, specifically, generally 0.01 ppm by weight to 100% by weight, preferably 0.02 ppm by weight to 50% by weight, more preferably 0.1 ppm by weight to 30% by weight,
component (B): with respect to the total weight of the off-taste substance and when converted to the weight of a free form, generally not less than 0.5 ppb by weight, preferably not less than 0.01 ppm by weight, more preferably not less than 0.1 ppm by weight, generally not more than 8% by weight, preferably not more than 1% by weight, more preferably not more than 0.5% by weight, specifically, generally 0.5 ppb by weight to 8% by weight, preferably 0.01 ppm by weight to 1% by weight, more preferably 0.1 ppm by weight to 0.5% by weight; in another embodiment, generally not less than 0.5 ppb by weight,
preferably not less than 1 ppb by weight, more preferably not less than 5 ppb by weight, generally not more than 80% by weight, preferably not more than 40% by weight, more preferably not more than 8% by weight, specifically, generally 0.5 ppb by weight to 80% by weight, preferably 1 ppb by weight to 40% by weight, more preferably 5 ppb by weight to 8% by weight.

More specifically, the following proportions can be adopted:
when component (B-1) is contained: with respect to the total weight of the off-taste substance, generally not less than 0.5 ppb by weight, preferably not less than 0.001 ppm by weight,
more preferably not less than 0.01 ppm by weight, generally not more than 2000 ppm by weight, preferably not more than 1000 ppm by weight, more preferably not more than 200 ppm by weight, specifically, generally 0.5 ppb by weight to 2000 ppm by weight,
preferably 0.001 to 1000 ppm by weight, more preferably 0.01 to 200 ppm by weight; in another embodiment, generally not less
than 0.5 ppb by weight, preferably not less than 1 ppb by weight, more preferably not less than 5 ppb by weight, generally not more than 2% by weight, preferably not more than 1% by weight, more preferably not more than 2000 ppm by weight, specifically, generally 0.5 ppb by weight to 2% by weight,
preferably 1 ppb by weight to 1% by weight, more preferably 5 ppb by weight to 2000 ppm by weight,
when component (B-2) is contained: with respect to the total weight of the off-taste substance, generally not less than 0.05 ppm by weight, preferably not less than 0.1 ppm by weight, more preferably not less than 1 ppm by weight, generally not more than 8% by weight, preferably not more than 1% by weight, more preferably not more than 0.5% by weight, specifically,
generally 0.05 ppm by weight to 8% by weight, preferably 0.1 ppm by weight to 1% by weight, more preferably 1 ppm by weight to 0.5% by weight; in another embodiment, generally not less than 0.05 ppm by weight, preferably not less than 0.1 ppm by weight, more preferably not less than 0.5 ppm by weight,
generally not more than 80% by weight, preferably not more than 40% by weight, more preferably not more than 8% by weight, specifically, generally 0.05 ppm by weight to 80% by weight,
preferably 0.1 ppm by weight to 40% by weight, more preferably 0.5 ppm by weight to 8% by weight.

In the composition of the present invention, a specific amount of each of the components (A) and (B) (converted to a free form) to be added to an oral product is as follows.

For example, when the off-taste substance is soybean protein, which is a vegetable protein, the amount to be added is as follows, though not limited thereto.
component (A): with respect to the total weight of the soybean protein, generally not less than 0.02 ppm by weight, preferably not less than 0.2 ppm by weight, more preferably not less than 0.5 ppm by weight, further preferably not less than 2.5 ppm by weight, generally not more than 10% by weight, preferably not more than 1% by weight, more preferably not more than 6250 ppm by weight, further preferably not more than 1250 ppm by weight, specifically, generally 0.02 ppm by weight to 10% by weight, preferably 0.2 ppm by weight to 1% by weight, more preferably 0.5 to 6250 ppm by weight, further preferably 2.5 to 1250 ppm by weight;
when component (B-1) is contained: with respect to the total weight of the soybean protein, generally not less than 0.001 ppm by weight, preferably not less than 0.01 ppm by weight, more preferably not less than 0.025 ppm by weight, further preferably, not less than 0.125 ppm by weight, generally not more than 200 ppm by weight, preferably not more than 20 ppm by weight, more preferably not more than 12.5 ppm by weight, further preferably not more than 2.5 ppm by weight, specifically, generally 0.001 to 200 ppm by weight, preferably 0.01 to 20 ppm by weight, more preferably 0.025 to 12.5 ppm by weight, further preferably 0.125 to 2.5 ppm by weight;
when component (B-2) is contained: with respect to the total weight of the soybean protein, generally not less than 0.1 ppm by weight, preferably not less than 1 ppm by weight, more preferably not less than 2.5 ppm by weight, further preferably not less than 12.5 ppm by weight, generally not more than 1% by weight, preferably not more than 0.1% by weight, more preferably not more than 500 ppm by weight, further preferably not more than 100 ppm by weight, specifically, generally 0.1 ppm by weight to 1% by weight, preferably 1 ppm by weight to 0.1% by weight, more preferably 2.5 to 500 ppm by weight, further preferably 12.5 to 100 ppm by weight.

When the off-taste substance is whey, which is an animal protein, the amount to be added is as follows, though not limited thereto.
component (A): with respect to the total weight of the whey, generally not less than 0.01 ppm by weight, preferably not less than 0.1 ppm by weight, more preferably not less than 0.25 ppm by weight, further preferably not less than 1.25 ppm by weight, generally not more than 5% by weight, preferably not more than 5000 ppm by weight, more preferably not more than 3125 ppm by weight, further preferably not more than 625 ppm by weight, specifically, generally 0.01 ppm by weight to 5% by weight, preferably 0.1 - 5000 ppm by weight, more preferably 0.25 - 3125 ppm by weight, further preferably 1.25 - 625 ppm by weight;
when component (B-1) is contained: with respect to the total weight of the whey, generally not less than 0.5 ppb by weight, preferably not less than 5 ppb by weight, more preferably not less than 30 ppb by weight, further preferably not less than 62.5 ppb by weight, generally not more than 100 ppm by weight, preferably not more than 10 ppm by weight, more preferably not more than 6.25 ppm by weight, further preferably not more than 1.25 ppm by weight, specifically, generally 0.5 ppb by weight to 100 ppm by weight, preferably 5 ppb by weight to 10 ppm by weight, more preferably 30 ppb by weight to 6.25 ppm by weight, further preferably 62.5 ppb by weight to 1.25 ppm by weight; when component (B-2) is contained: with respect to the total weight of the whey, generally not less than 0.05 ppm by weight, preferably not less than 0.5 ppm by weight, more preferably not less than 1.25 ppm by weight, further preferably not less than 6.25 ppm by weight, generally not more than 5000 ppm by weight, preferably not more than 500 ppm by weight, more preferably not more than 250 ppm by weight, further preferably 50 ppm by weight, specifically, generally 0.05 to 5000 ppm by weight, preferably 0.5 to 500 ppm by weight, more preferably 1.25 to not less than 250 ppm by weight, further preferably 6.25 to 50 ppm by weight.

When the off-taste substance is an amino acid, the amount to be added is as follows, though not limited thereto.
component (A): with respect to the total weight of the amino acid, generally not less than 0.2 ppm by weight, preferably not less than 2 ppm by weight, more preferably not less than 4 ppm by weight, further preferably not less than 20 ppm by weight, generally not more than 100% by weight, preferably not more than 10% by weight, more preferably not more than 5% by weight, further preferably not more than 1% by weight, specifically, generally 0.2 ppm by weight to 100% by weight, preferably 2 ppm by weight to 10% by weight, more preferably 4 ppm by weight to 5% by weight, further preferably 20 ppm by weight to 1% by weight;
when component (B-1) is contained: with respect to the total weight of the amino acid, generally not less than 0.001 ppm by weight, preferably not less than 0.01 ppm by weight, more preferably not less than 0.02 ppm by weight, further preferably not less than 0.1 ppm by weight, generally not more than 2000 ppm by weight, preferably not more than 200 ppm by weight, more preferably not more than 100 ppm by weight, further preferably not more than 20 ppm by weight, specifically, generally 0.001 to 2000 ppm by weight, preferably 0.01 to 200 ppm by weight, more preferably 0.02 to 100 ppm by weight, further preferably 0.1 to 20 ppm by weight;
when component (B-2) is contained: with respect to the total weight of the amino acid, generally not less than 1 ppm by weight, preferably not less than 10 ppm by weight, more preferably not less than 20 ppm by weight, further preferably not less than 100 ppm by weight, generally not more than 8% by weight, preferably not more than 0.8% by weight, more preferably not more than 0.4% by weight, further preferably not more than 800 ppm by weight, specifically, generally 1 ppm by weight to 8% by weight, preferably 10 ppm by weight to 0.8% by weight, more preferably 20 ppm by weight to 0.4% by weight, further preferably 100 to 800 ppm by weight.

When the off-taste substance is a high-intensity sweetener, the amount to be added is as follows, though not limited thereto.
component (A): with respect to the total weight of the high-intensity sweetener, generally not less than 2 ppm by weight, preferably not less than 20 ppm by weight, more preferably not less than 40 ppm by weight, further preferably not less than 200 ppm by weight, generally not more than 100% by weight, preferably not more than 50% by weight, more preferably not more than 30% by weight, further preferably not more than 10% by weight, specifically, generally 2 ppm by weight to 100% by weight, preferably 20 ppm by weight to 50% by weight, more preferably 40 ppm by weight to 30% by weight, further preferably 200 ppm by weight to 10% by weight;
when component (B-1) is contained: with respect to the total weight of the high-intensity sweetener, generally not less than 0.01 ppm by weight, preferably not less than 0.1 ppm by weight, more preferably not less than 0.2 ppm by weight, further preferably not less than 1 ppm by weight, generally not more than 2% by weight, preferably not more than 2000 ppm by weight, more preferably not more than 1000 ppm by weight, further preferably not more than 200 ppm by weight, specifically, generally 0.01 ppm by weight to 2% by weight, preferably 0.1 to 2000 ppm by weight, more preferably 0.2 to 1000 ppm by weight, further preferably 1 to 200 ppm by weight;
when component (B-2) is contained: with respect to the total weight of the high-intensity sweetener, generally not less than 10 ppm by weight, preferably not less than 100 ppm by weight, more preferably not less than 200 ppm by weight, further preferably not less than 1000 ppm by weight, generally not more than 80% by weight, preferably not more than 8% by weight, more preferably not more than 4% by weight, further preferably not more than 0.8% by weight, specifically, generally 10 ppm by weight to 80% by weight, preferably 100 ppm by weight to 8% by weight, more preferably 200 ppm by weight to 4% by weight, further preferably 1000 ppm by weight to 0.8% by weight.

When the off-taste substance is a vitamin, the amount to be added is as follows, though not limited thereto.
component (A): with respect to the total weight of the vitamin, generally not less than 1 ppm by weight, preferably not less than 10 ppm by weight, more preferably not less than 20 ppm by weight, further preferably not less than 100 ppm by weight, generally not more than 100% by weight, preferably not more than 50% by weight, more preferably not more than 25% by weight, further preferably not more than 5% by weight, specifically, generally 1 ppm by weight to 100% by weight, preferably 10 ppm by weight to 50% by weight, more preferably 20 ppm by weight to 25% by weight, further preferably 100 ppm by weight to 5% by weight;
when component (B-1) is contained: with respect to the total weight of the vitamin, generally not less than 0.05 ppm by weight, preferably not less than 0.5 ppm by weight, more preferably not less than 1 ppm by weight, further preferably not less than 5 ppm by weight, generally not more than 1% by weight, preferably not more than 1000 ppm by weight, more preferably not more than 500 ppm by weight, further preferably not more than 100 ppm by weight, specifically, generally 0.05 ppm by weight to 1% by weight, preferably 0.5 to 1000 ppm by weight, more preferably 1 to 500 ppm by weight, further preferably 5 to 100 ppm by weight;
when component (B-2) is contained: with respect to the total weight of the vitamin, generally not less than 5 ppm by weight, preferably not less than 50 ppm by weight, more preferably not less than 100 ppm by weight, further preferably not less than 500 ppm by weight, generally not more than 40% by weight, preferably not more than 4% by weight, more preferably not more than 2% by weight, further preferably not more than 0.4% by weight, specifically generally 5 ppm by weight to 40% by weight, preferably 50 ppm by weight to 4% by weight, more preferably 100 ppm by weight to 2% by weight, further preferably 500 ppm by weight to 0.4% by weight.

The weight ratio of the amounts of the components (A) and (B) to be added ((A):(B)) in the method of the present invention is generally 1:0.00001 to 400, preferably 1:0.00005 to 200, more preferably 1:0.0001 to 40, from the aspect of suppressing off-tastes, when converted to the weight of a free form.

The weight ratio of the amounts of the components (A) and (B-1) to be added ((A):(B-1)) in the method of the present invention is generally 1:0.00001 to 10, preferably 1:0.00005 to 5, more preferably 1:0.0001 to 1, from the aspect of suppressing off-tastes, when converted to the weight of a free form.

The weight ratio of the amounts of the components (A) and (B-2) to be added ((A):(B-2)) in the method of the present invention is generally 1:0.001 to 400, preferably 1:0.005 to 200, more preferably 1:0.01 to 40, from the aspect of suppressing off-tastes, when converted to the weight of a free form.

The method of the present invention may include treatments and steps generally included in the production step of oral products.

In the method of the present invention, methods for adding components (A) and (B) to oral products include direct addition to oral products, addition after dilution with water or a solvent, and the like, and the form of addition is not particularly limited. In addition, components (A) and (B) may be added to the oral product at any time, including addition to starting materials before production of oral products, during production, after completion, immediately before eating, during eating, and the like. Components (A) and (B) may be added at the same time or at different times. In addition, various definitions and preferable ranges are as described above.

The present invention also includes a method for producing an oral product with a suppressed off-taste, including adding components (A) and (B) to the oral product (sometimes to be abbreviated as the production method of the present invention).

The definition of components (A) and (B), oral products, and the like that can be used in the production method of the present invention are as described above.

The amounts of components (A) and (B) to be added to the oral product (the amounts of components (A) and (B) added to the oral product) and suitable ranges thereof in the production method of the present invention are as described above.

In addition, the content of the component having an off-taste in the oral product in the production method of the present invention is as described above.

The addition ratio of components (A) and (B) in the production method of the present invention can be appropriately determined according to various conditions such as the kind of components (A) and (B) and the concentration of off-taste substance.

The concentration of components (A) and (B) added to the oral substance in the production method of the present invention is not particularly limited, and appropriately determined according to the kind and content of the off-taste substance applied to the method of the present invention. That is, in the present invention, an oral product with a suppressed off-taste as a whole as compared with an oral product free of components (A) and (B) can be obtained by adding components (A) and (B) to an oral product containing an off-taste substance.

The concentrations of the above-mentioned components (A) and (B) to be added may be the amounts of ingestion (concentration at the time of eating) of the components (A) and (B), either as is or modified as appropriate, depending on the manner of ingestion of the oral product. That is, when producing a food or drink that is taken without being concentrated or diluted (e.g., eaten as is), the addition concentrations of the components (A) and (B) exemplified above can be read as the amounts of ingestion of the components (A) and (B). In addition, when producing a food or drink that is taken after concentration or dilution, the amounts of ingestion of the components (A) and (B) can be determined from the addition concentrations of the components (A) and (B) exemplified above and the magnification of concentration or dilution. For example, when producing a food or drink that is diluted 10 times and eaten, 10 times the addition concentrations of components (A) and (B) exemplified above can be determined as the amount of ingestion of the components (A) and (B).

The production method of the present invention may further include a step of adding other components (components other than components (A) and (B)). The "other components" here are as described above. It may also include treatments and steps generally included in the production step of food and drink, such as a step of dissolving, a step of filling in a container, and a step of sterilization.

Oral products obtained by the production method of the present invention are specifically oral products with a suppressed off-taste.

In the production method of the present invention, oral products can be produced using the same starting materials and the same method as those for general oral products, except that components (A) and (B) are added. Components (A) and (B) may be added at any stage of the production steps of oral products. That is, components (A) and (B) may be added to raw materials of oral products, may be added to oral products in the process of production, or may be added to finished food and drink. Further, components (A) and (B) may be added only once, or may be added in two or more divided portions. When components (A) and (B) are added, they may be added at the same time to the oral product or raw materials thereof, or may be added to the oral product or raw materials thereof each separately, or separately in any combination. That is, as long as components (A) and (B) coexist in an oral product, an off-taste suppressing effect can be obtained.

The present invention also includes an oral product containing components (A) and (B), especially an oral product with a suppressed off-taste, obtained by the production method of the present invention (also referred to as the oral product of the present invention). The oral product of the present invention refers to an oral product in which an off-taste such as a bitter taste and a rough taste derived from an off-taste substance is not felt because components (A) and (B) are contained together, even though it contains an off-taste substance. The oral product of the present invention may contain "other ingredients" as necessary, where various definitions and preferable ranges are as described above.

### [Example]

The present invention is described in more detail in the following Examples; however, the present invention is not limited by these examples in any way.

When "%", "ppm", "ppb" are indicated in the present specification, they mean "% by weight", "ppm by weight", and "ppb by weight", respectively, unless otherwise specified.

### (Example 1) Effect on vegetable protein - 1

### 1. Preparation of samples

A soybean powder (SUPRO661, DuPont Specialty Products Kabushiki Kaisha) was added to water at 4%(w/w), stirred, and then left at 5°C for one day. The supernatant liquid, or supernatant liquid after centrifugation (3000 rpm, 10 min, 15°C) was used. γ-Glu-Val-Gly (component A) was a commercially available product or was prepared according to the chemical synthesis method disclosed in JP-A-2010-154862. Citronellal, limonene, 2-methylpyrazine, butanoic acid, methyl anthranilate, and nootkatone were prepared by adding water to the concentrations shown in Table 3.

### 2. Test method

Based on solutions A1 to A3 in the following Table 1 and Table 2 (approximate evaluation scale), about 10 mL of the sample was swallowed, five evaluators each gave a score, and the average score was calculated (displayed).

**[Table 1]**

| | | soybean powder 4% aqueous solution: |
|---|---|---|
| No. | material name | bitter taste, rough taste |
| A1 | base solution (component A no addition) | 10 |
| A2 | base solution (component A 1 ppm) | 8 |
| A3 | 1/2 diluted solution of A1 | 4 |

**[Table 2]**

| approximate evaluation scale: | |
|---|---|
| 10 | felt (same as component A no addition) |
| 7 | felt a little |
| 5 | slightly felt |
| 3 | hardly felt |
| 0 | not felt |

### 3. Evaluation

The results of the average scores of the sensory evaluation by five evaluators are shown in Table 3.

**[Table 3]**

| material name | addition concentration (ppm) | soybean powder 4% aqueous solution: | |
|---|---|---|---|
| | | bitter taste, rough taste | |
| | | component A no addition | 1 ppm component A added |
| citronellal | 0.01 | 9 | 4 |
| (R/S)-limonene | 0.01 | 10 | 5 |
| 2-methylpyrazine | 0.02 | 10 | 4 |
| butanoic acid | 0.04 | 9 | 4 |
| methyl anthranilate | 0.01 | 10 | 3 |
| nootkatone | 1 | 8 | 3 |

### (Example 2) Effect on vegetable protein - 2

### 1. Preparation of samples

In the same manner as in Example 1, a soybean powder 4% solution was prepared. γ-Glu-Val-Gly (component A), nootkatone, and methyl anthranilate were each prepared by adding water to the concentrations shown in Table 4 or 5.

### 2. Test method

About 10 mL of the sample described in the following Table 4 or 5 was swallowed, two evaluators each gave a score, and the average score was calculated (displayed).

### 3. Evaluation

The results of the average scores of the sensory evaluation by two evaluators are shown in Tables 4 and 5.

**[Table 4]**

| | | component A | | | | |
|---|---|---|---|---|---|---|
| | concentration (ppm) | 0 | 0.1 | 1 | 10 | 50 |
| nootkatone | 0 | 10 | 10 | 8 | 7 | 7 |
| | 0.5 | 10 | 6 | 5 | 5 | 5 |
| | 1 | 8 | 5 | 3 | 3 | 3 |
| | 2 | 8 | 5 | 2 | 2 | 2 |
| | 4 | 8 | 4 | 2 | 2 | 2 |

**[Table 5]**

| | | component A | | | | |
|---|---|---|---|---|---|---|
| | concentration (ppm) | 0 | 0.1 | 1 | 10 | 50 |
| methyl anthranilate | 0 | 10 | 9 | 8 | 7 | 7 |
| | 0.005 | 10 | 7 | 5 | 5 | 5 |
| | 0.01 | 10 | 5 | 3 | 3 | 3 |
| | 0.05 | 10 | 5 | 3 | 3 | 3 |
| | 0.1 | 10 | 5 | 3 | 3 | 3 |

### (Example 3) Effect on animal protein (milk) - 1

### 1. Preparation of samples

Milk serum (WPC80, Lacto Japan Warrnambool Co., Ltd. Milk serum protein concentrate) was added to water to 8%(w/w) and stirred, and the solution with the milk serum dissolved therein was used. γ-Glu-Val-Gly, citronellal, limonene, 2-methylpyrazine, butanoic acid, methyl anthranilate, and nootkatone used were the same as those used in Example 1 and were each prepared by adding water to the concentrations shown in Table 7.

### 2. Test method

Based on solutions B1 to B3 in the following Table 6 and Table 2 (approximate evaluation scale), about 10 mL of the sample was swallowed, five evaluators each gave a score, and the average score was calculated (displayed).

**[Table 6]**

| | | milk (WPC) 8% solution |
|---|---|---|
| No. | material name | bitter taste, rough taste |
| B1 | base solution (component A no addition) | 10 |
| B2 | base solution component A 1 ppm | 8 |
| B3 | 1/2 diluted solution of B1 | 4 |

### 3. Evaluation

The results of the average scores of the sensory evaluation by five evaluators are shown in Table 7.

**[Table 7]**

| material name | addition concentration (ppm) | milk (WPC) 8% solution | |
|---|---|---|---|
| | | bitter taste, rough taste | |
| | | component A no addition | component A 1 ppm added |
| citronellal | 0.01 | 8 | 3 |
| (R/S)-limonene | 0.01 | 10 | 4 |
| 2-methylpyrazine | 0.02 | 9 | 4 |
| butanoic acid | 0.04 | 9 | 3 |
| methyl anthranilate | 0.01 | 9 | 3 |
| nootkatone | 1 | 7 | 2 |

### (Example 4) Effect on animal protein - 2

### 1. Preparation of samples

In the same manner as in Example 3, a milk serum 8% solution was prepared. γ-Glu-Val-Gly (component A) and nootkatone were each prepared by adding water to the concentrations shown in Table 8.

### 2. Test method

About 10 mL of the sample described in the following Table 8 was swallowed, two evaluators each gave a score, and the average score was calculated (displayed).

### 3. Evaluation

The results of the average scores of the sensory evaluation by two evaluators are shown in Table 8.

**[Table 8]**

| | | component A | | | | |
|---|---|---|---|---|---|---|
| | concentration (ppm) | 0 | 0.1 | 1 | 10 | 50 |
| nootkatone | 0 | 10 | 10 | 8 | 6 | 6 |
| | 0.5 | 10 | 7 | 4 | 3 | 3 |
| | 1 | 8 | 5 | 2 | 2 | 2 |
| | 2 | 7 | 5 | 2 | 2 | 2 |
| | 4 | 7 | 5 | 2 | 2 | 2 |

### (Example 5) Effect on amino acid - 1

### 1. Preparation of samples

An amino acid MIX powder (leucine, valine, isoleucine, lysine, methionine, phenylalanine, tryptophan, threonine, histidine: MP9 (Ajinomoto Co., Inc.)) was added to water to 0.5%(w/w) and stirred, and the solution with the amino acid dissolved therein was used. γ-Glu-Val-Gly, citronellal, limonene, 2-methylpyrazine, butanoic acid, methyl anthranilate, and nootkatone used were the same as those used in Example 1 and were each prepared by adding water to the concentrations shown in Table 10.

### 2. Test method

Based on solutions C1 to C3 in the following Table 9 and Table 2 (approximate evaluation scale), about 10 mL of the sample was swallowed, five evaluators each gave a score, and the average score was calculated (displayed).

**[Table 9]**

| | | amino acid (0.5%) |
|---|---|---|
| No. | material name | bitter taste, rough taste |
| C1 | base solution (component A no addition) | 10 |
| C2 | base solution component A 1 ppm | 8 |
| C3 | 1/2 diluted solution of C1 | 4 |

### 3. Evaluation

The results of the average scores of the sensory evaluation by five evaluators are shown in Table 10.

**[Table 10]**

| material name | addition concentration (ppm) | amino acid (0.5%) | |
|---|---|---|---|
| | | bitter taste, rough taste | |
| | | component A no addition | component A 1 ppm added |
| citronellal | 0.01 | 9 | 3 |
| (R/S)-limonene | 0.01 | 9 | 5 |
| 2-methylpyrazine | 0.02 | 10 | 5 |
| butanoic acid | 0.04 | 9 | 5 |
| methyl anthranilate | 0.01 | 9 | 4 |
| nootkatone | 1 | 8 | 4 |

### (Example 6) Effect on amino acid - 2

### 1. Preparation of samples

In the same manner as in Example 5, an amino acid 0.5% solution was prepared. γ-Glu-Val-Gly (component A) and nootkatone were each prepared by adding water to the concentrations shown in Table 11.

### 2. Test method

About 10 mL of the sample described in the following Table 11 was swallowed, two evaluators each gave a score, and the average score was calculated (displayed).

### 3. Evaluation

The results of the average scores of the sensory evaluation by two evaluators are shown in Table 11.

**[Table 11]**

| | | component A | | | | |
|---|---|---|---|---|---|---|
| | concentration (ppm) | 0 | 0.1 | 1 | 10 | 50 |
| nootkatone | 0 | 10 | 10 | 8 | 8 | 8 |
| | 0.5 | 10 | 7 | 5 | 5 | 5 |
| | 1 | 9 | 6 | 4 | 3 | 3 |
| | 2 | 8 | 5 | 3 | 3 | 3 |
| | 4 | 8 | 5 | 3 | 3 | 3 |

### (Example 7) Effect on vitamin

### 1. Preparation of samples

Thiamine nitrate (TAISHO TECHNOS Co., Ltd.) was added to water to 0.1%(w/w) and stirred, and the solution with the thiamine dissolved therein was used. γ-Glu-Val-Gly, citronellal, limonene, 2-methylpyrazine, butanoic acid, methyl anthranilate, and nootkatone used were the same as those used in Example 1 and were each prepared by adding water to the concentrations shown in Table 13.

### 2. Test method

Based on solutions D1 to D3 in the following Table 12 and Table 2 (approximate evaluation scale), about 10 mL of the sample was swallowed, five evaluators each gave a score, and the average score was calculated (displayed).

**[Table 12]**

| | | vitamin (thiamine nitrate 0.1%) |
|---|---|---|
| No. | material name | bitter taste, rough taste |
| D1 | base solution (component A no addition) | 10 |
| D2 | base solution component A 1 ppm | 8 |
| D3 | 1/2 diluted solution of D1 | 4 |

### 3. Evaluation

The results of the average scores of the sensory evaluation by five evaluators are shown in Table 13.

**[Table 13]**

| material name | addition concentration (ppm) | vitamin (thiamine nitrate 0.1%) | |
|---|---|---|---|
| | | bitter taste, rough taste | |
| | | component A no addition | component A 1 ppm added |
| citronellal | 0.01 | 9 | 4 |
| (R/S)-limonene | 0.01 | 9 | 4 |
| 2-methylpyrazine | 0.02 | 9 | 4 |
| butanoic acid | 0.04 | 9 | 4 |
| methyl anthranilate | 0.01 | 9 | 4 |
| nootkatone | 1 | 9 | 3 |

### (Example 8) Effect on sweetener

### 1. Preparation of samples

Stevia (Rebaudioside A, PureCircle) was added to water to 0.05%(w/w) and stirred, and the solution with the stevia dissolved therein was used (converted to sucrose: about 5 to 7.5%). γ-Glu-Val-Gly, citronellal, limonene, 2-methylpyrazine, butanoic acid, methyl anthranilate, and nootkatone used were the same as those used in Example 1 and were each prepared by adding water to the concentrations shown in Table 15.

### 2. Test method

Based on solutions E1 to E3 in the following Table 14 and Table 2 (approximate evaluation scale), about 10 mL of the sample was swallowed, five evaluators each gave a score, and the average score was calculated (displayed).

**[Table 14]**

| | | stevia (0.05%) |
|---|---|---|
| No. | material name | bitter taste |
| E1 | base solution (component A no addition) | 10 |
| E2 | base solution component A 1 ppm | 8 |
| E3 | 1/2 diluted solution of E1 | 4 |

### 3. Evaluation

The results of the average scores of the sensory evaluation by five evaluators are shown in Table 15.

**[Table 15]**

| material name | addition concentration (ppm) | stevia (0.05%) | |
|---|---|---|---|
| | | bitter taste | |
| | | component A no addition | component A 1 ppm added |
| citronellal | 0.01 | 9 | 3 |
| (R/S)-limonene | 0.01 | 9 | 4 |
| 2-methylpyrazine | 0.02 | 9 | 4 |
| butanoic acid | 0.04 | 9 | 4 |
| methyl anthranilate | 0.01 | 9 | 4 |
| nootkatone | 1 | 8 | 3 |

It has been found that the combination of component A with citronellal, limonene, 2-methylpyrazine, butanoic acid, methyl anthranilate, and nootkatone has the effect of synergistically suppressing the off-taste of food products.

### [Industrial Applicability]

According to the present invention, tasty foods and drinks with suppressed off-tastes can be provided.

This application is based on a patent application No. 2021-083396 filed in Japan, the contents of which are encompassed in full herein.

## Claims

1. A composition for suppressing an off-taste, comprising the following components (A) and (B):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of citronellal, limonene, 2-methylpyrazine, butanoic acid, methyl anthranilate, and nootkatone.

2. The composition according to claim 1, wherein the component (A) is γ-Glu-Val-Gly or a salt thereof.

3. The composition according to claim 1 or 2, wherein the off-taste is a bitter taste, a rough taste, a harsh taste, or an astringent taste derived from an off-taste substance.

4. The composition according to claim 3, wherein the off-taste substance is at least one selected from the group consisting of a vegetable protein, an animal protein, an amino acid, a vitamin, and a high-intensity sweetener.

5. The composition according to any one of claims 1 to 4, wherein the weight ratio of component (B) to component (A) is 1:0.00001 to 400 when converted to the weight of a free form.

6. The composition according to any one of claims 1 to 5, which is used such that the amount of component (A) added to the oral product is 0.01 to 200 ppm by weight with respect to the total weight of the oral product, when converted to the weight of a free form.

7. The composition according to any one of claims 1 to 5, which is used such that the amount of component (B) added to the oral product is 0.0005 - 20 ppm by weight with respect to the total weight of the oral product, when converted to the weight of a free form.

8. A method for suppressing an off-taste of an oral product, comprising adding the following components (A) and (B):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of citronellal, limonene, 2-methylpyrazine, butanoic acid, methyl anthranilate, and nootkatone.

9. The method according to claim 8, wherein the component (A) is γ-Glu-Val-Gly or a salt thereof.

10. The method according to claim 8 or 9, wherein the off-taste is a bitter taste, a rough taste, a harsh taste, or an astringent taste derived from an off-taste substance.

11. The method according to claim 10, wherein the off-taste substance is at least one selected from the group consisting of a vegetable protein, an animal protein, an amino acid, a vitamin, and a high-intensity sweetener.

12. The method according to any one of claims 8 to 11, wherein the weight ratio of the amount of component (B) to be added to the amount of component (A) to be added is 1:0.00001 to 400 when converted to the weight of a free form.

13. The method according to any one of claims 8 to 12, wherein the amount of component (A) to be added to the amount of the total weight of the off-taste substance in the oral product is 0.01 ppm by weight to 100% by weight when converted to the weight of a free form.

14. The method according to any one of claims 8 to 13, wherein the amount of component (B) to be added to the amount of the total weight of the off-taste substance in the oral product is 0.5 ppb by weight to 80% by weight when converted to the weight of a free form.

15. A method for producing an oral product with a suppressed off-taste, comprising adding the following components (A) and (B) :
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of citronellal, limonene, 2-methylpyrazine, butanoic acid, methyl anthranilate, and nootkatone.

16. The method according to claim 15, wherein the component (A) is γ-Glu-Val-Gly or a salt thereof.

17. The method according to claim 15 or 16, wherein the off-taste is a bitter taste, a rough taste, a harsh taste, or an astringent taste derived from an off-taste substance.

18. The method according to claim 17, wherein the off-taste substance is at least one selected from the group consisting of a vegetable protein, an animal protein, an amino acid, a vitamin, and a high-intensity sweetener.

19. The method according to any one of claims 15 to 18, wherein the weight ratio of the amount of component (B) to be added to the amount of component (A) to be added is 1:0.00001 to 400 when converted to the weight of a free form.

20. The method according to any one of claims 15 to 19, wherein the amount of component (A) to be added to the amount of the total weight of the off-taste substance in the oral product is 0.01 ppm by weight to 100% by weight when converted to the weight of a free form.

21. The method according to any one of claims 15 to 20, wherein the amount of component (B) to be added to the amount of the total weight of the off-taste substance in the oral product is 0.5 ppb by weight to 80% by weight when converted to the weight of a free form.

22. An oral product obtained by the method according to any one of claims 15 to 21.
